# EUROPEAN PATENT APPLICATION

(11) **EP 4 030 375 A1**
(43) Date of publication of application: **20.07.2022**
(21) Application number: 20892752.5
(22) Date of filing: 12.08.2020
(51) Int. Cl.: G06Q 50/08

(54) **WORK ASSIST SERVER, WORK ASSIST METHOD, AND WORK ASSIST SYSTEM**

(30) Priority: 25.11.2019 JP 2019212617
(71) Applicant: KOBELCO CONSTRUCTION MACHINERY CO., LTD., Hiroshima-shi Hiroshima 731-5161 (JP)
(72) Inventor: SAWADA, Yusuke, Hiroshima-shi, Hiroshima 731-5161 (JP); SASAKI, Hitoshi, Hiroshima-shi, Hiroshima 731-5161 (JP); SAIKI, Seiji, Hiroshima-shi, Hiroshima 731-5161 (JP); YAMAZAKI, Yoichiro, Hiroshima-shi, Hiroshima 731-5161 (JP)
(74) Representative: Dr. Schoen, Neymeyr & Partner Patentanwälte mbB
(86) International application number: PCT/JP2020/030685
(87) International publication number: WO 2021/106281

(57) **Abstract**

There are provided a server and a system that can cause content of work to be achieved using a work machine at each of a plurality of work positions, and the like to be intuitively recognized by a worker of the work machine. A work environment image of a worksite showing extension aspects of specified areas A1 and A2 specified through an input interface (for example, an input interface 610) of a first client (for example, a worker terminal 60) is outputted to an output interface (for example, a remote output interface 220) of a second client (for example, a remote operation device 20) together with specified area related information about the specified areas similarly specified through the input interface of the first client.

## Description

### Technical Field

The present invention relates to a work assist server for assisting sharing of information about work by a plurality of workers by communication with each of a plurality of clients assigned to the plurality of workers, respectively.

### Background Art

There is proposed a terminal device for a remote monitoring assist system, for sharing information between a worker who is performing patrol inspection in a plant and persons waiting outside the worksite with a sufficient accuracy (see, for example, Patent Literature 1). The terminal device comprises a video input unit configured to input video data of a site, a pen or mouse type input operation selection unit, a detection unit configured to detect whether new video has been acquired or not, a communication control unit configured to wirelessly perform data transmission to and reception from the outside and an input/output screen display unit configured to display an input screen where predetermined data is to be inputted.

### Citation List

### Patent Literature

Patent Literature 1
Japanese Patent Laid-Open No. 2005-242830

### Summary of Invention

### Technical Problem

However, it is preferable that, in a worksite where a plurality of work-related persons are involved, information about an area requiring caution can be shared among the plurality of work-related persons.

Therefore, an object of the present invention is to provide a server and a system that can cause information about an area requiring caution in a worksite to be shared among a plurality of work-related persons.

### Solution to Problem

The present invention relates to a work assist server for assisting sharing of information about work by a plurality of workers by communication with each of a plurality of clients assigned to the plurality of workers, respectively.

The work assist server of the present invention comprises: a first assist processing element causing, based on communication with a first client among the plurality of clients, a work environment image showing a state of a worksite to be displayed on an output interface of the first client and recognizing an extension aspect of a specified area constituting a part of the worksite, which is specified on the work environment image through an input interface of the first client, and specified area related information about the specified area; and a second assist processing element causing, based on communication with a second client among the plurality of clients, the work environment image showing the extension aspect of the specified area, which has been recognized by the first assist processing element, to be displayed on an output interface of the second client together with the specified area related information.

A work assist system of the present invention is configured with the work assist server of the present invention and the plurality of clients.

According to the work assist server and work assist system of the present invention (hereinafter, appropriately referred to as "the work assist server and the like"), a work environment image of a worksite showing an extension aspect of a specified area specified through an input interface of a first client is outputted to or displayed on an output interface of a second client together with specified area related information about the specified areas similarly specified through the input interface of the first client. Therefore, a plurality of workers to whom a plurality of clients are assigned, respectively, can easily share the extension aspect of a specified area in a worksite and specified area related information about the extension aspect.

The second client may function as the first client, and, furthermore, the work environment image of the worksite showing the extension aspect of another specified area may be displayed on the output interface of another second client together with specified area related information about the other specified area. The first client may be the other second client. Therefore, for example, by each of a plurality of workers involved in a common site specifying one or more specified areas and specified area related information through the input interface of the worker's client, it is possible to share a work environment image with an abundant amount of information among the plurality of workers through output interfaces of the workers' clients.

### Brief Description of Drawings

FIG. 1 is a diagram about a configuration of a work assist system as one embodiment of the present invention.
FIG. 2 is a diagram about a configuration of a remote operation device.
FIG. 3 is a diagram about a configuration of a work machine.
FIG. 4 is a diagram about a first function of the work assist system.
FIG. 5 is a diagram about a second function of the work assist system.
FIG. 6 is a diagram about a remote output form of a work environment image.
FIG. 7 is a diagram about a second output form of the work environment image.
FIG. 8 is a diagram about a third output form of the work environment image.
FIG. 9 is a diagram about a fourth output form of the work environment image.
FIG. 10 is a diagram about a fifth output form of the work environment image.

### Description of Embodiments

### (Configuration of work assist system)

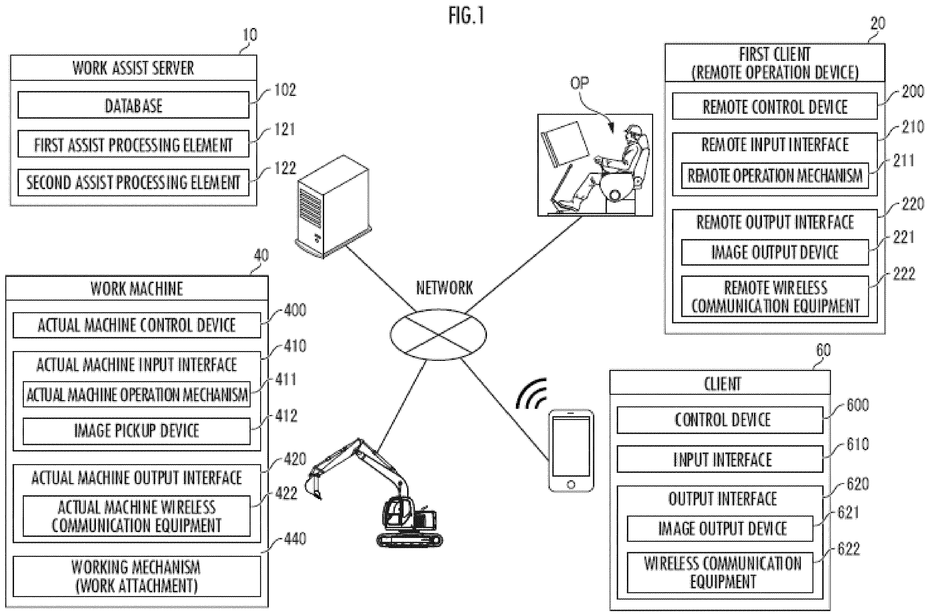

A work assist system as one embodiment of the present invention shown in FIG. 1 is configured with a work assist server 10, a remote operation device 20 for remotely controlling a work machine 40 and a worker terminal 60. "A plurality of clients" may be configured with one or more remote operation devices 20 and one or more worker terminals 60 or may be configured with a plurality of remote operation devices 20 or a plurality of worker terminals 60. The work assist server 10, the remote operation device 20, the work machine 40 and the worker terminal 60 are configured such that mutual network communication is possible.

### (Configuration of work assist server)

The work assist server 10 comprises a database 102, a first assist processing element 121 and a second assist processing element 122. In addition to work environment images showing states of worksites, the database 102 stores and holds extension aspects of specified areas, specified area related information about the specified areas, chats among a plurality of workers and the like. The database 102 may be configured in a database server separate from the work assist server 10. Each assist processing element is configured with an arithmetic processing unit (a single core processor, a multi-core processor or a processor core constituting the multi-core processor), which reads necessary data and software from a storage device such as a memory and, for the data, executes arithmetic processing described later according to the software.

### (Configuration of remote operation device)

The remote operation device 20 constituting one client comprises a remote control device 200, a remote input interface 210 and a remote output interface 220. The remote control device 200 is configured with an arithmetic processing unit (a single core processor, a multi-core processor or a processor core constituting the multi-core processor), which reads necessary data and software from a storage device such as a memory and, for the data, executes arithmetic processing according to the software. The remote input interface 210 comprises a remote operation mechanism 211. The remote output interface 220 comprises an image output device 221 and remote wireless communication equipment 222.

The one client may be configured with a mobile terminal that cooperates with or has a function of mutually communicating with the remote operation device 20. The mobile terminal has a configuration similar to that of the worker terminal 60 described later.

The remote operation mechanism 211 includes an operation device for traveling, an operation device for turning, an operation device for boom, an operation device for arm and an operation device for bucket. Each operation device has operation levers to receive a rotation operation. The operation levers of the operation device for traveling (travel levers) are operated to move a lower traveling body 410 of the work machine 40. The travel levers may also serve as travel pedals. For example, travel pedals fixed to the bases or lower end portions of the travel levers may be provided. The operation lever of the operation device for turning (a turn lever) is operated to activate a hydraulic swing motor constituting a turning mechanism 430 of the work machine 40. The operation lever of the operation device for boom (a boom lever) is operated to move a boom cylinder 442 of the work machine 40. The operation lever of the operation device for arm (an arm lever) is operated to move an arm cylinder 444 of the work machine 40. The operation lever of the operation device for bucket (a bucket lever) is operated to move a bucket cylinder 446 of the work machine 40.

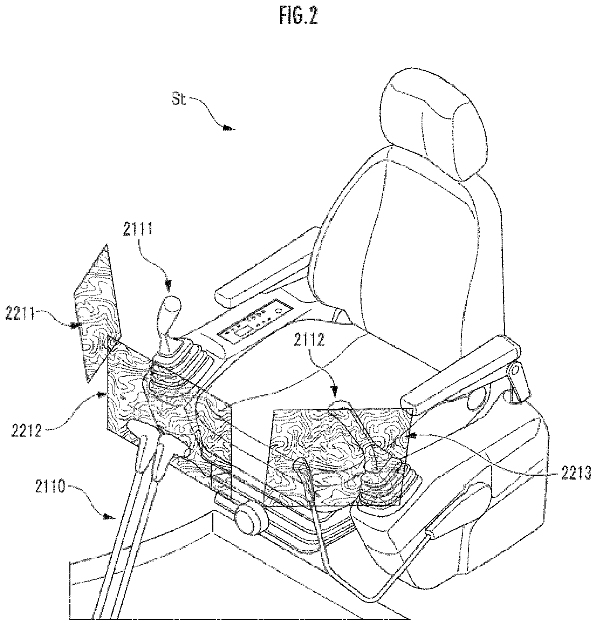

For example, as shown in FIG. 2, the operation levers constituting the remote operation mechanism 211 are arranged around a seat St for an operator to sit on. Though the seat St is in a form like a high back chair with armrests, it may be in any form that enables a remote operator OP2 to sit down, such as a form like a low back chair without a headrest and a form like a chair without a backrest.

In front of the seat St, a pair of left and right travel levers 2110 corresponding to left and right crawlers are arranged left and right, side by side. One operation lever may serve as a plurality of operation levers. For example, a right-side operation lever 2111 provided in front of a right-side frame of the seat St shown in FIG. 2 may function as a boom lever when being operated in a front-back direction and function as a bucket lever when being operated in a left-right direction. Similarly, a left-side operation lever 2112 provided in front of a left-side frame of the seat St shown in FIG. 2 may function as an arm lever when being operated in the front-back direction and function as a turn lever when being operated in the left-right direction. Lever patterns may be arbitrarily changed by an operation instruction by an operator.

For example, as shown in FIG. 2, the image output device 221 is configured with a diagonally right forward image output device 2211, a front image output device 2212 and a diagonally left forward image output device 2213 arranged diagonally right forward of, in front of and diagonally left forward of the seat St, respectively. Each of the output devices 2211 to 2213 may further comprise a speaker (a voice output device).

### (Configuration of work machine)

The work machine 40 comprises an actual machine control device 400, an actual machine input interface 410, an actual machine output interface 420 and a working mechanism 440. The actual machine control device 400 is configured with an arithmetic processing unit (a single core processor, a multi-core processor or a processor core constituting the multi-core processor), which reads necessary data and software from a storage device such as a memory and, for the data, executes arithmetic processing according to the software.

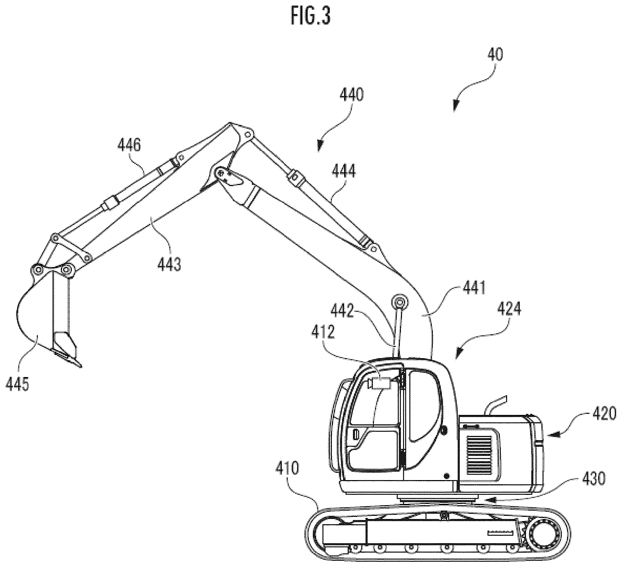

The work machine 40 is, for example, a crawler shovel (a construction machine) and comprises the crawler-type lower traveling body 410 and an upper turning body 420 turnably mounted on the lower traveling body 410 via the turning mechanism 430 as shown in FIG. 3. On a front left side portion of the upper turning body 420, a cab (a driving room) 424 is provided. On a front center portion of the upper turning body 420, a work attachment 440 is provided.

The actual machine input interface 410 comprises an actual machine operation mechanism 411 and an image pickup device 412. The actual machine operation mechanism 411 comprises a plurality of operation levers arranged around the seat arranged inside the cab 424 similarly to those of the remote operation mechanism 211. A driving mechanism or a robot that receives a signal corresponding to an operation state of a remote operation lever and moves an actual machine operation lever based on the received signal is provided in the cab 424. The image pickup device 412 is installed, for example, inside the cab 424 to pick up an image of an environment that includes at least a part of the work attachment 440 through the front window of the cab 424.

The actual machine output interface 420 comprises actual machine wireless communication equipment 422.

The work attachment 440 as a working mechanism comprises a boom 441 raisably mounted on the upper turning body 420, an arm 443 turnably coupled with the tip end of the boom 441 and a bucket 445 turnably coupled with the tip end of the arm 443. The boom cylinder 442, the arm cylinder 444 and the bucket cylinder 446, each of which is configured with a telescopic hydraulic cylinder, are attached to the work attachment 440.

The boom cylinder 442 is interposed between the boom 441 and the upper turning body 420 to expand and contract by being supplied with hydraulic fluid to cause the boom 441 to turn in a direction of being raised. The arm cylinder 444 is interposed between the arm 443 and the boom 441 to expand and contract by being supplied with hydraulic fluid to cause the arm 443 to turn around a horizontal axis relative to the boom 441. The bucket cylinder 446 is interposed between the bucket 445 and the arm 443 to expand and contract by being supplied with hydraulic fluid to cause the bucket 445 to turn around a horizontal axis relative to the arm 443.

### (Configuration of worker terminal)

The worker terminal 60 constituting another client is a terminal device such as a smartphone or a tablet terminal and comprises a control device 600, an input interface 610 and an output interface 620. The control device 600 is configured with an arithmetic processing unit (a single core processor, a multi-core processor or a processor core constituting the multi-core processor), which reads necessary data and software from a storage device such as a memory and, for the data, executes arithmetic processing according to the software.

The input interface 610 is configured with touch panel type buttons, switches and the like. The output interface 620 comprises an image output device 621, a voice output device and wireless communication equipment 622.

### (Functions)

### (First function (output of work environment image and chat))

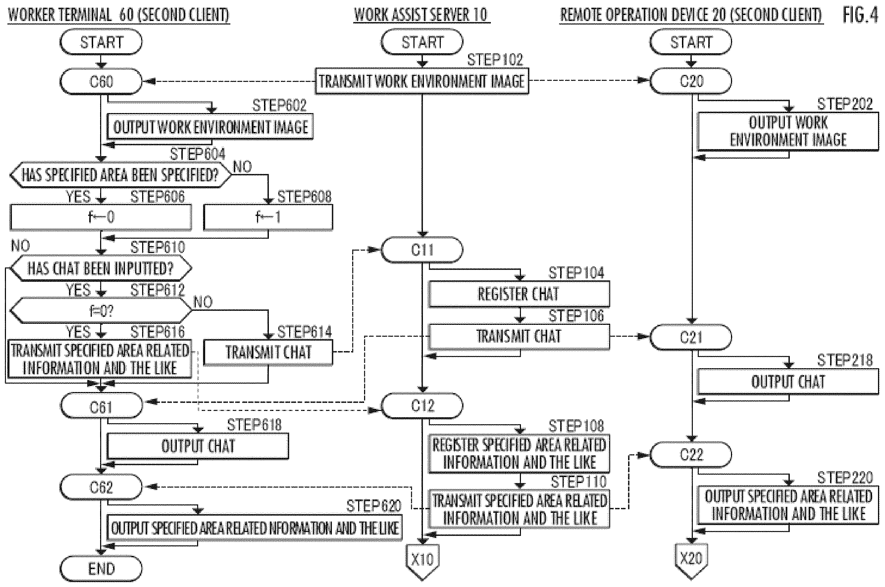

Functions of the work assist system in the configuration described above will be described using flowcharts shown in FIG.s 4 and 5. In the flowcharts, each block indicated by "C..." is used to simplify description, means transmission and/or reception of data and means a conditional branch in which processing in a branch direction is executed on condition of transmission and/or reception of the data. FIG. 4 shows a flowchart of a case where the worker terminal 60 constitutes "a first client", and the remote operation device 20 constitutes "a second client". However, on the contrary, the worker terminal 60 may constitute "the second client", and the remote operation device 20 may constitute "the first client".

That each of components (arithmetic processing resources or hardware resources) of the present invention "recognizes" information is a concept that includes processes for preparing the information in all forms that can be used in succeeding processes, such as receiving the information, reading out or searching for the information from or in a storage device or the like, writing the information into (causing the information to be stored and held in) a storage device or the like or registering the information with the storage device or the like, and performing estimation, judgment, identification, measurement, prediction and the like of the information by executing arithmetic processing of an output signal from a sensor and/or received or retrieved basic information according to a predetermined algorithm.

In the worker terminal 60, in response to a specification operation (a first specification operation) being performed by a first worker through the input interface 610, a work environment image request is transmitted from the worker terminal 60 to the work assist server 10. In response thereto, a work environment image registered with or stored and held in the database 102 is transmitted to the worker terminal 60 by the first assist processing element 121 (FIG. 4/STEP 102).

In the worker terminal 60, when the work environment image is received by the wireless communication equipment constituting the output interface 620 (FIG. 4/C60), the work environment image is outputted by the image output device 621 constituting the output interface 620 (FIG. 4/STEP 602).

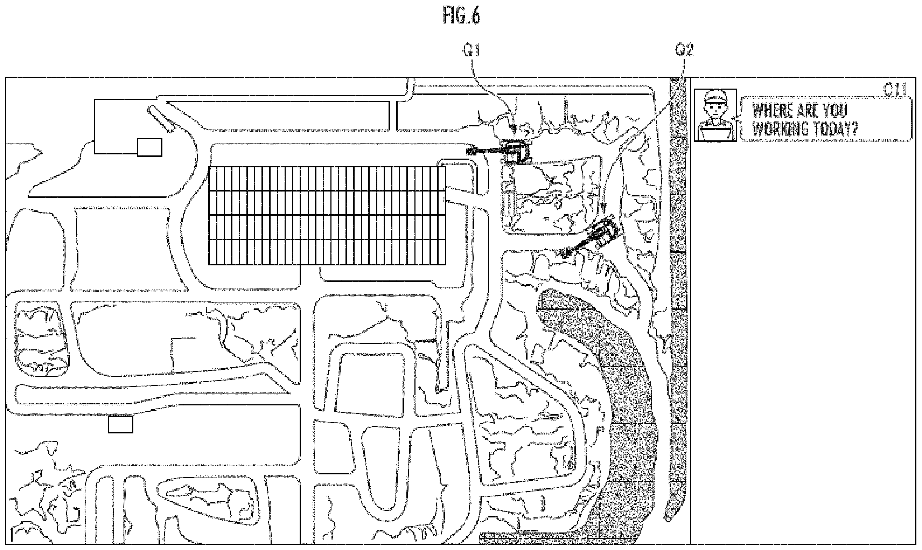

Thereby, for example, as shown in FIG. 6, a bird's eye map or a bird's eye picked-up image of a worksite is outputted by the image output device constituting the output interface 620 as the work environment image. The bird's eye picked-up image includes an image Q1 of a first work machine 40 and an image Q2 of a second work machine 40. The bird's eye picked-up image may be acquired, for example, through an image pickup device mounted on an unmanned plane or an image pickup device installed on a structure such as a pole in the worksite. Each of an image picked-up position and angle of view of the picked-up image as the work environment image may be arbitrarily changed. The bird's eye map may be generated based on the bird's eye picked-up image.

Similarly, in the remote operation device 20, in response to a specification operation (a first specification operation) being performed by a second worker through the remote input interface 210, a work environment image request is transmitted from the remote operation device 20 to the work assist server 10. In response thereto, the work environment image registered with or stored and held in the database 102 is transmitted to the remote operation device 20 by the second assist processing element 122 (FIG. 4/STEP 102).

In the remote operation device 20, when the work environment image is received by the remote wireless communication equipment 222 constituting the remote output interface 220 (FIG. 4/C20), the work environment image is outputted by the image output device 221 constituting the remote output interface 220 (FIG. 4/STEP 202).

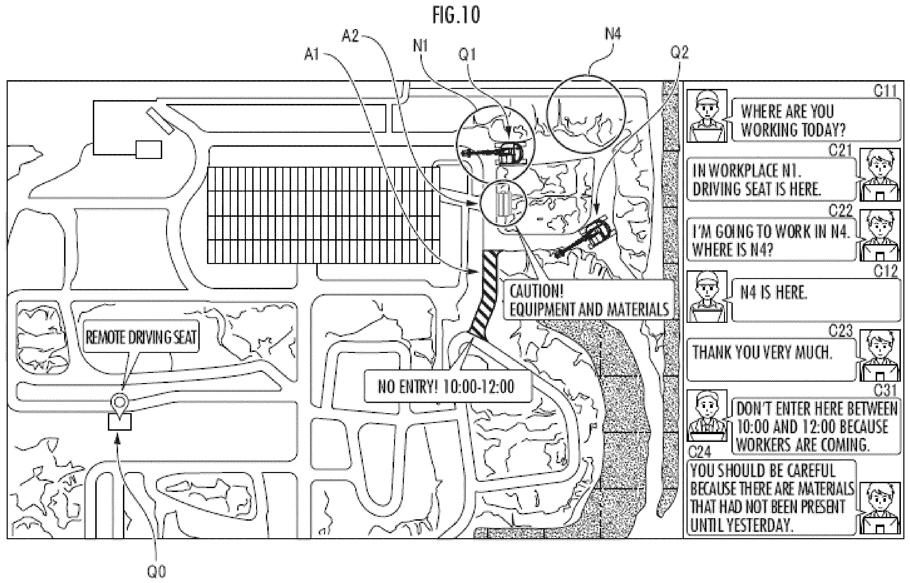

In the worker terminal 60, it is judged whether or not the extension aspect of a specified area is specified as a part (an image area) of the work environment image through an operation of the input interface 610 (FIG. 4/STEP 604). For example, the extension aspect or contour of the specified area may be recognized by a trace of the first worker's fingertip or a pen being recognized on a touch panel constituting both of the input interface 610 and the output interface 620. Thereby, for example, as shown in FIG. 10, a first specified area A1 and a second specified area A2 can be specified by the first worker on the work environment image.

If a result of the judgment is positive (FIG. 4/STEP 604: YES), a flag f is set to "0" (FIG. 4/STEP 606). On the other hand, if the result of the judgment is negative (FIG. 4/STEP 604: NO), the flag f is set to "1" (FIG. 4/STEP 608).

In the worker terminal 60, it is judged whether or not a chat has been inputted through the input interface 610 (FIG. 4/STEP 610). For example, a result of content of an utterance of the first worker inputted through a microphone constituting the input interface 610 being recognized by a voice recognition device may be recognized as a chat. Further, by a trace of the first worker's fingertip being recognized on a touch type keypad constituting the input interface 610, a chat may be recognized.

If it is judged that a chat has not been inputted during a predetermined period (FIG. 4/STEP 610: NO), the series of processes ends. If it is judged that a chat has been inputted during the predetermined period (FIG. 4/STEP 610: YES), it is judged in the worker terminal 60 whether the flag f is 0 or not (FIG. 4/STEP 612). If a result of the judgment is negative (FIG. 4/STEP 612: NO), that is, if the extension aspect of a specified area is not specified, the chat is transmitted to the work assist server 10 (FIG. 4/STEP 614).

On the other hand, if the result of the judgment is positive (FIG. 4/STEP 612: YES), that is, if the extension aspect of a specified area is specified, at least a part of content of the chat is recognized as specified area related information and is transmitted to the work assist server 10 (FIG. 4/STEP 616). The specified area related information may include, for example, specification time limit information showing that the area is a specified area only for a certain period, information about objects existing in the specified area or the environment, and the like.

In the work assist server 10, when the chat is received (FIG. 4/C11), the chat is registered with or stored and held in the database 102 (FIG. 4/STEP 104). After that, the chat is transmitted to the worker terminal 60 by the second assist processing element 122 (FIG. 4/STEP 106). Further, the chat is transmitted to the remote operation device 20 by the second assist processing element 122 (FIG. 4/STEP 106).

In the worker terminal 60, when the chat is received (FIG. 4/C61), the chat is outputted to the image output device 621 constituting the output interface 620 (FIG. 4/STEP 618). Similarly, in the remote operation device 20, when the chat is received (FIG. 4/C21), the chat is outputted to the image output device 221 constituting the remote output interface 220 (FIG. 4/STEP 218). Thereby, for example, as shown in FIG. 6, a chat C11 of the first worker is outputted on the right side of the work environment image on each of the image output device 621 constituting the output interface 620 of the worker terminal 60 (the first client) and the image output device 221 constituting the remote output interface 220 of the remote operation device 20 (the second client).

In the work assist server 10, when the extension aspect of and related information about the specified area (hereinafter appropriately referred to as "the specified area related information and the like") are received (FIG. 4/C12), or when at least a part of the content of the chat is recognized as the specified area related information by the first assist processing element 121, the specified area related information and the like are registered with or stored and held in the database 102 (FIG. 4/STEP 108). After that, the specified area related information and the like are transmitted to the worker terminal 60 by the second assist processing element 122 (FIG. 4/STEP 110). Further, the specified area related information and the like are transmitted to the remote operation device 20 by the second assist processing element 122 (FIG. 4/STEP 110).

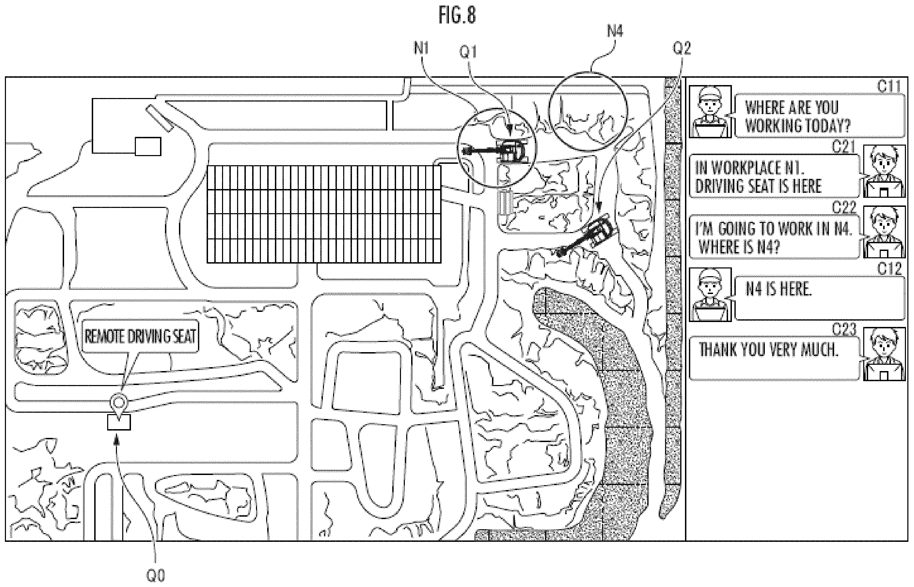

In the worker terminal 60, when the specified area related information and the like are received (FIG. 4/C62), the specified area related information and the like are outputted to the image output device 621 constituting the output interface 620 (FIG. 4/STEP 620). Similarly, in the remote operation device 20, when the specified area related information and the like are received (FIG. 4/C22), the specified area related information and the like are outputted to the image output device 621 constituting the output interface 620 (FIG. 4/STEP 220). Thereby, for example, as shown in FIG. 8, in addition to the work environment image showing the extension aspect of a specified area N4 (a workplace), the specified area related information in the form of the chat C12 of the first worker is outputted to each of the image output device 621 constituting the output interface 620 of the worker terminal 60 (the first client) and the image output device 221 constituting the remote output interface 220 of the remote operation device 20 (the second client) to be on the right of the work environment image.

### (Example)

Description will be made on an example of aspects of output transition of a work environment image and chats on the output interface of each client according to the first function of the work assist system described using the flowchart of FIG. 4, with reference to FIG.s 6 to 10. In this example, each client can function as both of the first and second clients. An image showing exchange of chats may constitute a part of a work environment image or may be an image separate from the work environment image.

As shown in FIG. 6, a bird's eye picked-up image or a bird's eye map of a worksite is outputted as a work environment image. In this state, the chat C11 of "Where are you working today?" by the first worker is outputted as shown in FIG. 6 (see FIG. 4/STEPS 218 and 618).

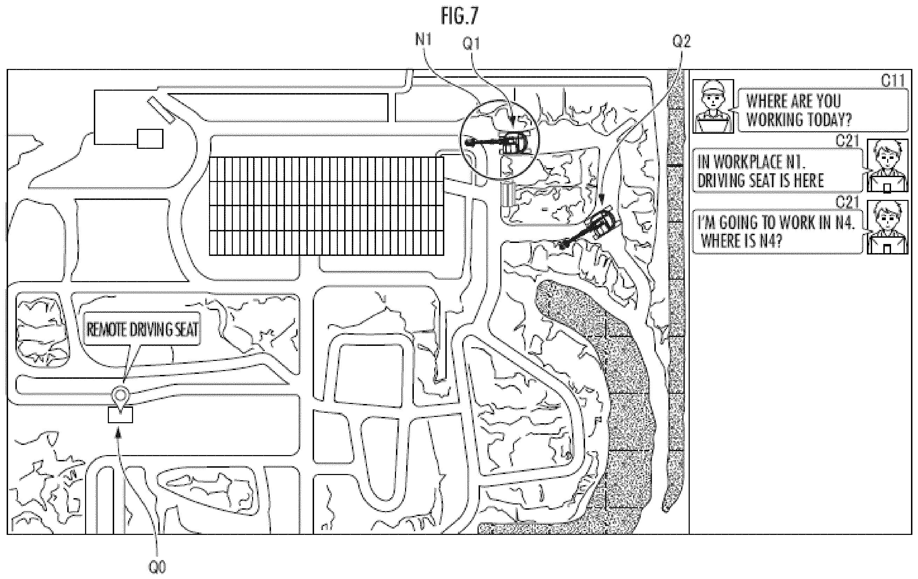

In response thereto, an image (for example, a contour line) showing the extension aspect of a workplace N1 (a specified area) specified by the second worker and an image showing a position Q0 of the remote operation device 20 are outputted, and a chat C21 of "I'm in Workplace N1, and the driving seat is here" by the second worker is outputted as specified area related information, as shown in FIG. 7 (see FIG. 4/STEP 220, STEP 604: YES→...→STEP 620). Next, as shown in FIG. 7, a chat C22 of "I'm going to work in N4 next, and where is N4?" by the second worker is outputted (see FIG. 4/STEPS 218 and 618).

In response thereto, an image (for example, a contour line) showing the extension aspect of a workplace N4 (a specified area) specified by the first worker is outputted, and a chat C12 of "N4 is here" by the first worker is outputted as specified area related information, as shown in FIG. 8 (see FIG. 4/STEP 220, STEP 604: YES→...→STEP 620). Furthermore, as shown in FIG. 8, a chat C23 of "Thank you very much" by the second worker is outputted (see FIG. 4/STEPS 218 and 618).

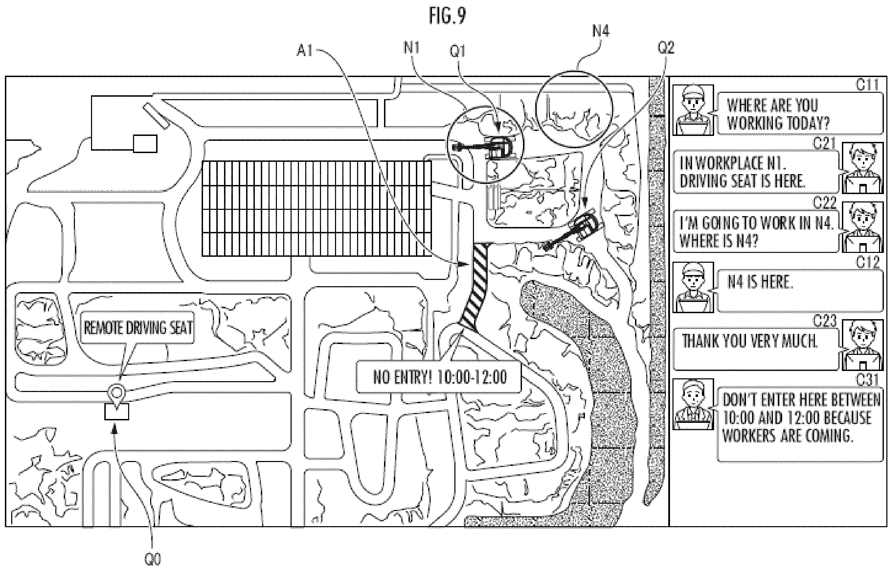

Then, as shown in FIG. 9, an image showing the extension aspect of the first specified area A1 (for example, a contour line and a color or pattern inside the contour line) specified by a third worker is outputted; and a chat C31 of "Don't enter here between 10:00 and 12:00 because workers are coming" by the third worker is outputted as specified area related information (see FIG. 4/STEP 220, STEP 604: YES→...→STEP 620).

Further, as shown in FIG. 10, an image showing the extension aspect of the second specified area A2 (for example, a contour line and a color or pattern inside the contour line) specified by the second worker is outputted; and a chat C24 of "You should be careful because there are materials that had not been present until yesterday" by the second worker is outputted as specified area related information (see FIG. 4/STEP 220, STEP 604: YES→...→STEP 620).

### (Second function (remote operation of work machine))

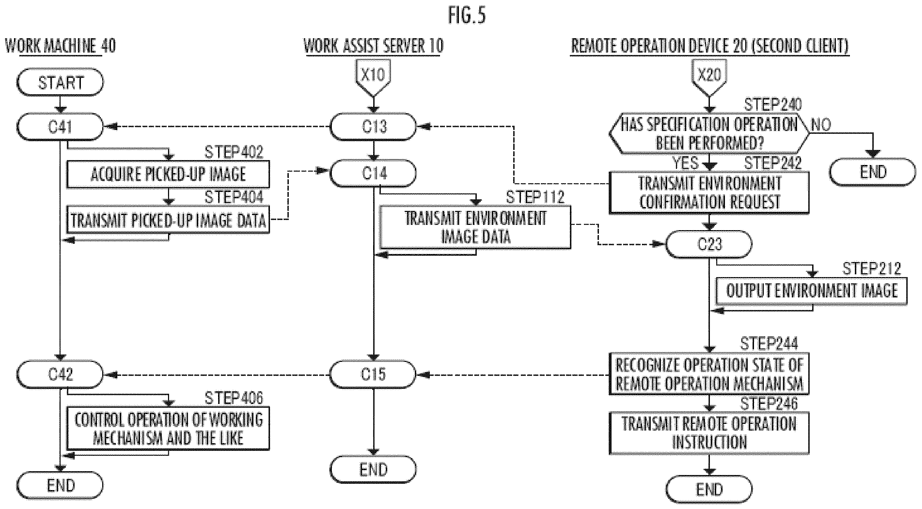

On the remote operation device 20, it is judged by the operator OP whether a specification operation (a second specification operation) through the remote input interface 210 has been performed or not (FIG. 5/STEP 240). The "specification operation" is, for example, an operation of tapping the image Q1 or Q2 or the like on the work environment image (see FIG. 7) to specify a work machine 40 that the worker intends to remotely operate, on the remote input interface 210. If a result of the judgment is negative (FIG. 5/STEP 240: NO), the series of processes ends. On the other hand, if the result of the judgment is positive (FIG. 4/STEP 240: YES), an environment confirmation request is transmitted to the work assist server 10 through the remote wireless communication equipment 222 (FIG. 4/STEP 242).

In the work assist server 10, when the environment confirmation request is received, the environment confirmation request is transmitted to a corresponding work machine 40 by the first assist processing element 121 (FIG. 5/C13).

In the work machine 40, when the environment confirmation request is received through the actual machine wireless communication equipment 422 (FIG. 5/C41), the actual machine control device 400 acquires a picked-up image through the image pickup device 412 (FIG. 5/STEP 402). Picked-up image data indicating the picked-up image is transmitted to the work assist server 10 by the actual machine control device 400 through the actual machine wireless communication equipment 422 (FIG. 5/STEP 404).

In the work assist server 10, when the picked-up image data is received (FIG. 5/C14), environment image data corresponding to the picked-up image data (all or a part of the picked-up image itself or data indicating a simulated environment image generated based thereon) is transmitted to the remote operation device 20 (FIG. 5/STEP 112).

In the remote operation device 20, when the environment image data is received through the remote wireless communication equipment 222 (FIG. 5/C23), an environment image corresponding to the environment image data is outputted to the image output device 221 (FIG. 5/STEP 212). Thereby, for example, an environment image that includes the boom 441, the arm 443, the bucket 445 and the arm cylinder 444 that are parts of the work attachment 440 as a working mechanism is displayed on each of the image output device 221 and a second image output device 221.

On the remote operation device 20, the operation state of the remote operation mechanism 211 is recognized by the remote control device 200 (FIG. 5/STEP 244), and a remote operation instruction corresponding to the operation state is transmitted to the work assist server 10 through the remote wireless communication equipment 222 (FIG. 5/STEP 246).

In the work assist server 10, when the remote operation instruction is received, the remote operation instruction is transmitted to the work machine 40 by the first assist processing element 121 (FIG. 5/C15).

In the work machine 40, when the operation instruction is received by the actual machine control device 400 through the actual machine wireless communication equipment 422 (FIG. 5/C42), operation of the work attachment 440 and the like is controlled (FIG. 5/STEP 406). For example, work of scooping dirt in front of the work machine 40 by the bucket 445, causing the upper turning body 420 to turn and dropping the dirt from the bucket 445 is executed.

### (Advantageous effects)

According to the work assist system in the above configuration and the work assist server 10 constituting the work assist system, a work environment image of a worksite showing the extension aspect of a specified area specified through an input interface (for example, the input interface 610) of a first client (for example, the worker terminal 60) is outputted to an output interface (for example, the remote output interface 220) of a second client (for example, the remote operation device 20) together with specified area related information about the specified area similarly specified through the input interface of the first client (see FIG. 4/STEP 616→...→STEP 220). Therefore, each of a plurality of workers to whom a plurality of clients are assigned, respectively, can easily share extension aspects of specified areas (for example, the workplaces N1 and N4 and the first and second specified areas A1 and A2) at a worksite and specified area related information thereabout (see FIG.s 6 to 10).

Further, the second client (for example, the remote operation device 20) may function as the first client, and, furthermore, the work environment image of the worksite showing the extension aspect of another specified area may be displayed on the output interface of another second client (for example, the worker terminal 60) together with specified area related information about the other specified area. Therefore, for example, by each of a plurality of workers involved in a common site specifying one or more specified areas (for example, the workplaces N1 and N4 and the first and second specified areas A1 and A2) and specified area related information through the input interface of the worker's client, it is possible to share a work environment image with an abundant amount of information among the plurality of workers through output interfaces of the workers' clients (see FIG.s 6 to 10).

Based on communication with the plurality of clients (20 and 60), the second assist processing element 122 recognizes chats inputted through the input interfaces (210 and 610) of the plurality of clients, and causes the chats to be displayed on each of the output interfaces (220 and 620) of the plurality of clients. The first assist processing element 121 recognizes a chat recognized based on communication with the first client (for example, the remote operation device 20) as specified area related information (see FIG. 4/STEP 220, STEP 604: YES→...→STEP 620).

Thereby, chats issued from the plurality of workers are outputted through the output interface (220 and 620) of the workers' clients. Further, a chat issued through the first client is recognized as specified area related information, and, in response thereto, the specified area related information is displayed together with a work environment image showing the extension aspect of a specified area as described above (see FIG.s 6 to 10). Therefore, by sharing a relation between one chat in a time series of chats and a specified area in the work environment image among the plurality of workers, it is possible to smoothly share specified area related information about the specified area.

Based on communication with the first client (for example, the remote operation device 20), the first assist processing element 121 recognizes at least a part of content of a chat issued from the first client as specified area related information on condition that a specified area is specified by the first client.

Thereby, a chat that is not accompanied by specification of the extension aspect of a specified area, among chats issued through each of the clients (20 and 60), is recognized as a mere chat, while at least a part of a chat accompanied by specification of the extension aspect of a specified area can be recognized as specified area related information.

It is preferable that the first assist processing element 121 recognizes a specification period for a specified area as specified area related information based on communication with a first client (for example, one remote operation device 20 or worker terminal 60), and, based on communication with a second client (for example, another remote operation device 20), the second assist processing element 122 causes a work environment image of a worksite, on which the extension aspect of a specified area is displayed only during the specification period recognized by the first assist processing element 121, to be displayed on the output interface (220) of the second client together with specified area related information.

Thereby, the work environment image of the worksite, on which the extension aspect of the specified area is displayed, is displayed on the output interface (220) of the second client (20) together with the specification period as specified area related information about the specified area. Therefore, it is possible to cause the worker to recognize that the specified area exists during a limited time, through the second client. Further, since the specified area is not displayed in a form different from the surroundings after the specified period elapses, such a situation is avoided that the workers misunderstand that the specified area exists.

It is preferable that, based on communication with a first client (for example, one remote operation device 20) or a work machine 40 cooperating with the first client, the first assist processing element 121 recognizes the position of the work machine 40, and that, based on communication with a second client (for example another remote operation device 20 or worker terminal 60), the second assist processing element 122 causes a work environment image of a worksite showing the position of the work machine 40 recognized by the first assist processing element 121 to be displayed on the output interface of the second client (20 or 60) together with specified area related information.

Thereby, it is possible to share a positional relationship between the position of a work machine 40 operated by a worker and a specified area among a plurality of workers.

### (Other embodiment of the present invention)

Though the work assist server 10 is configured with one or more servers separate from each of the remote operation device 20, the work machine 40 and the worker terminal 60 in the above embodiment (see FIG. 1), the work assist server 10 may be a component of the remote operation device 20, the work machine 40 or the worker terminal 60 as another embodiment. Each of the components 102, 121 and 122 of the work assist server 10 may be components of mutually communicable two or more among the remote operation device 20, the work machine 40 and the worker terminal 60.

Though at least a part of a chat is recognized as specified area related information in the above embodiment, information inputted through an input interface regardless of a chat may be recognized as specified area related information as another embodiment. In this case, after the first assist processing element 121 recognizes that the input information has been specified as specified area related information by a client, the input information may be recognized as being the specified area related information.

Though a part or all of content of a chat after a specified area is specified is recognized as specified area related information in the above embodiment, at least a part of a chat of the same worker inputted during a specified period before a point of time when a specified area is specified may be recognized as specified area related information as another embodiment. Further, like a case where, for a specified area specified by a first worker, a second worker issues a chat of "I hear that equipment and materials will be carried into the specified area at 14:00", at least a part of a chat may be recognized as specified area related information about a specified area without specification of the extension aspect of the specified area being required. In this case, after the first assist processing element 121 recognizes that a chat has been specified as specified area related information by a client, the chat may be recognized as being the specified area related information.

### Reference Signs List

- 10: work assist server
- 20: remote operation device
- 40: work machine
- 60: worker terminal
- 102: database
- 121: first assist processing element
- 122: second assist processing element
- 210: remote input interface
- 220: remote output interface
- 410: actual machine input interface
- 420: actual machine output interface
- 440: work attachment (working mechanism)
- 610: input interface
- 620: output interface

## Claims

1. A work assist server for assisting sharing of information about work by a plurality of workers by communication with each of a plurality of clients assigned to the plurality of workers, respectively, the work assist server comprising:
a first assist processing element causing, based on communication with a first client among the plurality of clients, a work environment image showing a state of a worksite to be displayed on an output interface of the first client and recognizing an extension aspect of a specified area constituting a part of the worksite, which is specified on the work environment image, and specified area related information about the specified area through an input interface of the first client; and
a second assist processing element causing, based on communication with a second client among the plurality of clients, the work environment image showing the extension aspect of the specified area, which has been recognized by the first assist processing element, to be displayed on an output interface of the second client together with the specified area related information.

2. The work assist server according to claim 1, wherein
the second assist processing element recognizes a chat inputted through an input interface of each of the plurality of clients based on communication with the client and causes the chat to be displayed on an output interface of each of the plurality of clients; and
the first assist processing element recognizes the chat recognized based on communication with the first client as the specified area related information.

3. The work assist server according to claim 2, wherein
the first assist processing element recognizes at least a part of content of the chat issued from the first client as the specified area related information on condition that the specified area is specified by the first client, based on communication with the first client.

4. The work assist server according to any one of claims 1 to 3, wherein
the first assist processing element recognizes a specification period of the specified area as the specified area related information based on communication with the first client; and
the second assist processing element causes the work environment image, on which the extension aspect of the specified area is displayed, to be displayed on the output interface of the second client together with the specified area related information only during the specification period recognized by the first assist processing element, based on communication with the second client.

5. The work assist server according to any one of claims 1 to 4, wherein
the first assist processing element recognizes, based on communication with the first client or a work machine cooperating with the first client, a position of the work machine; and
the second assist processing element causes the work environment image showing the position of the work machine recognized by the first assist processing element to be displayed on the output interface of the second client together with the specified area related information, based on communication with the second client.

6. A work assist system comprising the work assist server according to any one of claims 1 to 5 and the plurality of clients.

7. A work assist method for assisting sharing of information about work by a plurality of workers by communication with each of a plurality of clients assigned to the plurality of workers, respectively, the work assist method executing:
a first assist process for causing, based on communication with a first client among the plurality of clients, a work environment image showing a state of a worksite to be displayed on an output interface of the first client and recognizing an extension aspect of a specified area constituting a part of the worksite, which is specified on the work environment image, and specified area related information about the specified area through an input interface of the first client; and
a second assist process for causing, based on communication with a second client among the plurality of clients, the work environment image showing the extension aspect of the specified area, which has been recognized by the first assist processing element, to be displayed on an output interface of the second client together with the specified area related information.
